# EUROPÄISCHE PATENTSCHRIFT

(11) **EP 0 373 670 B1**
(45) Veröffentlichungstag und Bekanntmachung des Hinweises auf die Patenterteilung: **19.07.1995**
(21) Anmeldenummer: 89123255.5
(22) Anmeldetag: 15.12.1989
(51) Int. Cl.: H02M 3/338, H02M 3/10

(54) **Schaltungsanordnung für einen Wechselrichter oder einen Gleichspannungswandler**
Circuit arrangement for an inverter of a DC-DC converter
Disposition de circuit pour un onduleur ou un convertisseur de courant continu

(30) Priorität: 16.12.1988 DE 3842465
(43) Veröffentlichungstag der Anmeldung: 20.06.1990
(73) Patentinhaber: Erbe Elektromedizin GmbH., D-72072 Tübingen (DE)
(72) Erfinder: Flachenecker, Gerhard, Prof. Dr.-Ing., D-8012 Ottobrunn (DE); Lindenmeier, Heinz, Prof. Dr.-Ing., D-8033 Planegg (DE); Fastenmeier, Karl, Prof. Dr.-Ing., D-8000 München 83 (DE)
(74) Vertreter: Endlich, Fritz, Dipl.-Phys. Patentanwalt

(56) Entgegenhaltungen:
- EP-A- 0 060 519
- US-A- 4 208 706

## Beschreibung

Die Erfindung betrifft eine selbstschwingende Schaltungsanordnung für einen Wechselrichter oder für einen Gleichspannungswandler entsprechend dem Oberbegriff des Patentanspruchs 1.

Eine Schaltungsanordnung dieser Art ist aus EP-A-060 519 bekannt. Diese bekannte Schaltungsanordnung basiert auf dem Prinzip der Pulsweitenmodulation. Dabei wird als nachteilig angesehen, daß die elektronischen Schalter unter Strom abgeschaltet werden, so daß Schaltverlustleistung in den Schaltern während jeder halben Periode im Moment des Abschaltens entsteht. Zusätzlich entstehen in beträchtlichem Umfang unerwünschte Spektralanteile im Ausgangssignal.

Mit Wechselrichtern können elektrische Lasten aus Gleichspannungsquellen gespeist werden. Hierbei dienen Wechselrichter beispielsweise zur Anpassung elektrischer Lasten an Gleichspannungsquellen, zur Steuerung und/oder Regelung des Stromes, der Spannung oder der Leistung in elektrischen Lasten, zur Potentialtrennung zwischen Gleichspannungsquellen und elektrischen Lasten und/oder zur Wandlung einer Gleichspannung in eine Wechselspannung oder eine andere Gleichspannung. Bekannte Anwendungen von Wechselrichtern sind z.B. die Erzeugung von Betriebsspannungen in elektronischen Geräten, oder die Verwendung als elektrische Spannungs-, Strom- oder Energiequelle für separate elektrische Lasten. Als spezielles praktisches Anwendungsbeispiel für eine derartige Schaltungsanordnung sei die Regelung der. Ausgangsleistung eines Hochfrequenzgenerators für Hochfrequenz-Chirurgiegeräte genannt.

In Tietze-Schenk: "Halbleiter-Schaltungstechnik", 7. Auflage, (1985) Springer-Verlag, Heidelberg wird auf Seite 539 ff. eine Übersicht über andere bekannte Wechselrichter gegeben, die dort als Schaltregler bezeichnet werden. Diesen bekannten Wechselrichtern ist gemeinsam, daß sie eine sog. Speicherdrossel verwenden. Dabei wird von dem Verhalten einer Induktivität Gebrauch gemacht, daß der sie durchfließende Strom stetig ist, die an ihr anliegende Spannung aber springen kann.

In den verschiedenen Ausführungen dieser bekannten Wechselrichter wird nun die Speicherdrossel mit Hilfe elektronischer Schalter auf unterschiedliche Weise zwischen zwei unterschiedlichen Gleichspannungen oder zwischen dem Eingangs- und dem Lastkreis hin und her geschaltet. Dabei entsteht an der Speicherdrossel eine rechteckförmige Spannung und es fließt ein dreiecksförmiger, d.h. abwechselnd ungefähr linear ansteigender und ungefähr linear abfallender Strom.

In der Speicherdrossel ist immer eine gewisse magnetische Energie gespeichert, wovon der Name "Speicherdrossel" abgeleitet ist. Während der Phasen mit ansteigendem Strom nimmt diese Energie zu, in den Phasen mit abnehmendem Strom nimmt auch die gespeicherte Energie ab. Der Strom fließt aber auch ständig durch den Lastkreis. Um dort möglichst kleine Spannungsschwankungen zu erhalten, wird dem Lastkreis ein Ladekondensator parallel geschaltet.

Das Schalten des Stromes in der Speicherdrossel wird allgemein als "Takten" bezeichnet und erfolgt bei relativ hohen Frequenzen, also z.B. bei etwa 10 kHz. Wegen dieser hohen Frequenz kann der Ladekondensator relativ kleine Kapazität haben. Durch geeignete Steuerung des Zeitablaufs beim Takten kann man erreichen, daß der mittlere Strom durch die Speicherdrossel genau dem Strom entspricht, den der Lastkreis aufnehmen soll. Da der vom Lastkreis aufgenommene Strom und die Spannung im Lastkreis über den Lastwiderstand zusammenhängen, kommt dies einer Regelung der Ausgangsspannung gleich.

Es wird grundsätzlich zwischen "primärgetakteten" und "sekundärgetakteten" Schaltreglern unterschieden. Beim sekundär getakteten Schaltregler wird die zu erzeugende Gleichspannung direkt aus einer vorhandenen Gleichspannung erzeugt. Hierbei müssen aber unterschiedliche Schaltungsvarianten verwendet werden, je nachdem ob die zu erzeugende Gleichspannung kleiner oder größer als die vorhandene Gleichspannung ist und je nachdem ob beide Spannungen gleiche Polarität haben oder nicht.

Beim primär getakteten Schaltregler ist die Speicherdrossel als Transformator ausgebildet, dessen Primärseite entweder unsymmetrisch oder im Gegentakt von elektronischen Schaltern zwischen Spannungen unterschiedlichen Potentials hin- und hergeschaltet wird. Bei den primär getakteten Schaltreglern unterscheidet man zwischen Sperr- und Durchflußwandlern, je nachdem ob im Sekundarkreis des Transformators während der Ladephase der Speicherdrossel (Durchflußwandler) oder während der Entladephase der Speicherdrossel (Sperrwandler) Strom fließt. Da der Transformator keine Gleichströme übertragen kann, entsteht auf der Sekundärseite eine Wechselspannung, die mit einem geeigneten Gleichrichter in eine Gleichspannung umgewandelt werden muß. In diese Gleichrichterschaltung kann auch eine Glättungsdrossel einbezogen sein.

Die Vorteile von Schaltreglern gegenüber den bekannten Längsreglern (in Serie geschaltete steuerbare Elemente, wie Transistoren) liegen in ihrem hohen Wirkungsgrad, der Möglichkeit einer Spannungsvergrößerung und der Potentialumkehr. Im Fall des primär getakteten Schaltreglers können, anstelle von großen 50 Hz-Netztransformatoren, kleine Hochfrequenztransformatoren zur Veränderung des Spannungsniveaus verwendet werden.

Alle bekannten Schaltregler dieser Art haben jedoch ein grundsätzliches Problem. Bei jedem Schaltvorgang muß nämlich der volle die Speicherdrossel durchfließende Strom von einem Stromkreis zu einem anderen umgeschaltet werden. Bei Verwendung realer Schalter, wie bipolaren Transistoren und Feldeffekttransistoren, sowie realer Speicherdrosseln oder Transformatoren mit parasitären Kapazitäten, entstehen endliche Schaltzeiten, die zu Verlusten in den elektronischen Schaltern führen. Da das Takten mit hoher Frequenz erfolgt, ergeben die Schaltverluste eine relativ hohe Verlustleistung und führen zur unerwünschten Erwärmung der elektronischen Schaltelemente. Um gefährliche Überhitzungen auszuschließen, müssen die elektronischen Schalter und die dafür notwendigen Kühlelemente im allgemeinen deutlich überdimensioniert werden. Dies führt zu höheren Kosten, zur Gewichts- und Volumenzunahme.

Ein weiterer Nachteil des sekundär getakteten Schaltreglers ist die Tatsache, daß unterschiedliche Schaltungsvarianten gewählt werden müssen, wenn entweder Spannungsreduzierung oder Spannungserhöhung benötigt wird, oder wenn die Polarität der zu erzeugenden Gleichspannung umgekehrt werden soll.

Es ist Aufgabe der Erfindung, eine selbstschwingende Leistungsstufe für einen Wechselrichter zu schaffen, durch den Schwierigkeiten der genannten Art möglichst weitgehend vermieden werden können, auch wenn diese Leistungsstufe in einem Gleichspannungswandler Verwendung findet. Diese Aufgabe wird erfindungsgemäß durch den Gegenstand des Patentanspruchs 1 gelöst. Vorteilhafte Weiterbildungen der Erfindung sind Gegenstand der Unteransprüche. Bei dem im folgenden näher beschriebenen Ausführungsbeispiel einer Schaltungsanordnung nach der Erfindung ist zwischen den elektronischen Schalter und den Lastkreis in an sich bekannter Weise (EP-A-060519) ein Serienresonanzkreis geschaltet, der als Energiespeicher dient.

An den Serienresonanzkreis ist ein Phasendetektor zum Nachweis der Phase des Stroms i_{L} in dem Serienresonanzkreis angeschlossen, um Schaltimpulsflanken U_{P} synchron mit der Phasenlage zu liefern. Dies kann beispielsweise in einfacher Weise dadurch erzielt werden, daß in den Stromkreis des Serienresonanzkreises ein Stromwandler eingefügt wird, an dessen Ausgang eine erste Spannung erhalten wird,die so weitgehend wie möglich dem den Serienresonanzkreis durchfließenden Strom phasengleich ist.Die mit dem Stromwandler gewonnene Spannung wird über Impulsformerstufen so an den Steuereingang des elektronischen Schalters zugeführt, daß eine Stromrückkopplung entsteht und eine Rechteckwelle in der zweiten Spannung erzeugt wird, die von der ersten Spannung geleitete Schaltimpulsflanken aufweist. Diese Rückkopplung ist phasenmäßig so eingestellt, daß der elektronische Schalter auf die Gleichspannung mit dem höheren, d.h. positiveren Potential schaltet, wenn der momentane Strom von dem elektronischen Schalter aus in den Serienresonanzkreis hineinfließt. Der Schalter schaltet auf die Gleichspannung mit dem niedrigeren, d.h. negativeren Potential, wenn der momentane Strom in dem Serienresonanzkreis in der Richtung von dem Serienresonanzkreis in den elektronischen Schalter hineinfließt. Die Selbsterregung der selbstschwingenden Leistungsstufe des Wechselrichters ermöglicht, daß diese Stufe zumindest angenähert auf der Resonanzfrequenz des Serienresonanzkreises schwingt. Entsprechend wird im Speicherelement, nämlich dem Serienresonanzkreis, nicht nur magnetische Energie zwischengespeichert, wie im Fall der Speicherdrossel, sondern sowohl magnetische als auch elektrische Energie.

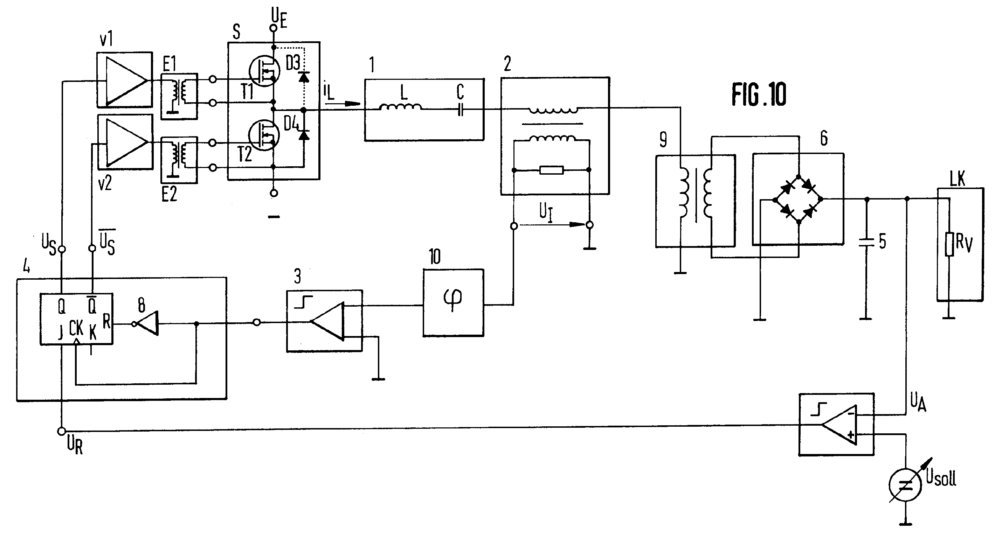

Zur Regelung des Wechselrichters ist vor dem Eingang des elektronischen Schalters eine Verknüpfungsschaltung angeordnet, die die geschilderte Rückkopplung unterbrechen oder durchschalten kann, wobei dieser binäre Zustand der Verknüpfungsschaltung mit einer Rückkopplung von einer Regelspannung gesteuert wird, deren Erzeugung beispielsweise in Fig. 10 dargestellt ist.

Da im Speicherelement dieses Wechselrichters ein hochfrequenter Strom fließt, muß die daran angeschlossene Last eine gewisse minimale Leitfähigkeit für Ströme während der positiven und negativen Sinushalbwellen aufweisen. Im Falle eines Gleichspannungswandlers ist der in der Last benutzte Gleichrichter ein Zweiweggleichrichter zwischen dem Serienresonanzkreis und dem Lastkreis und ein Ladekondensator ist parallel zu der Last geschaltet.

Ein Vorteil dieses Ausführungsbeispiels (liegt darin, daß sich durch die beschriebene Rückkopplung selbständig eine Taktfrequenz einstellt, die genau zur effektiven Resonanzfrequenz des Serienresonanzkreises, also des Speicherelementes paßt. Die aus dem Strom gewonnene Rechteckwelle mit steilen Schaltflanken für den elektronischen Schalter springt genau um, wenn der Strom durch Null geht, d.h.auch der elektronische Schalter stromlos ist. Durch diese Wahl der Schaltzeitpunkte ergeben sich extrem niedrige Umschaltverluste.

Ein weiterer Vorteil ist es, daß der Serienresonanzkreis einen nahezu sinusförmigen Strom erzwingt. Dies reduziert auch die Verlustleistung in den Dioden des Zweiweggleichrichters und im Ladekondensator.

Für die Realisierung des elektronischen Schalters gibt es mehrere Möglichkeiten. In einer Ausgestaltung der Erfindung ist der elektronische Schalter als Komplementärschaltung aus zwei Transistoren, d.h. entweder aus zwei bipolaren Transistoren oder zwei Feldeffekttransistoren unterschiedlicher Betriebsspannungspolarität aufgebaut. Man wird diese Ausgestaltung wählen, wenn zwei Transistortypen gleicher Leistungsdaten, aber unterschiedlicher Betriebsspannungspolarität zur Verfügung stehen.

In einer anderen Ausgestaltung der Erfindung ist der elektronische Schalter als Quasikomplementärschaltung aus zwei Transistoren, d.h. entweder aus zwei bipolaren Transistoren oder zwei Feldeffekttransistoren gleicher Betriebsspannungspolarität aufgebaut. Man wird diese Ausgestaltung wählen, wenn nicht zwei Transistortypen unterschiedlicher Betriebsspannungspolarität und gleicher Leistungsdaten zur Verfügung stehen.

Die Verknüpfungsschaltung, die vor dem Steuereingang des elektronischen Schalters liegt, dient zur Regelung der Ausgangsspannung des Schaltreglers. Sie kann die Rückkopplung entweder durchschalten oder unterbrechen. Wenn die Rückkopplung durchgeschaltet ist, klingt die Schwingung im Serienresonanzkreis an, wenn sie unterbrochen ist, klingt die Schwingung wieder ab. Für den Fall der Unterbrechung der Rückkopplung werden verschiedene Ausgestaltungen der Verknüpfungsschaltung vorgeschlagen. In einer Ausgestaltung verharrt die Verknüpfungsschaltung im Fall der Unterbrechung der Rückkopplung in einem solchen Ruhezustand, daß der elektronische Schalter zur Gleichspannung mit dem niedrigeren Potential hin durchgeschaltet bleibt. In diesem Fall wird vorgeschlagen, von diesem Gleichspannungsanschluß zum Eingang des Serienresonanzkreises eine Freilaufdiode so zu schalten, daß diese Freilaufdiode im Ruhezustand des Schaltreglers gesperrt ist. Da die bekannten Elemente zum Aufbau elektronischer Schalter nur eine Stromrichtung übernehemen können, wird die entgegengesetzte Stromrichtung beim Abklingen der Schwingung im Serienresonanzkreis von dieser Freilaufdiode übernommen.

In einer anderen Ausgestaltung der Erfindung verharrt die Verknüpfungsschaltung im Fall der Unterbrechung des Rückkopplungssignals in einem solchen Ruhezustand, daß der elektronische Schalter zur Gleichspannung mit dem höheren Potential hin durchgeschaltet bleibt. In diesem Fall wird vorgeschlagen, von diesem Gleichspannungsanschluß zum Eingang des Serienresonanzkreises eine Freilaufdiode so zu schalten, daß diese Freilaufdiode im Ruhezustand des Schaltreglers gesperrt ist. Damit wird die gleiche Wirkung erzielt wie in der vorhergehenden Beschreibung.

In einer weiteren Ausgestaltung verharrt die Verknüpfungsschaltung im Fall der Unterbrechung des Rückkopplungssignals in einem solchen Ruhezustand, daß der elektronische Schalter geöffnet bleibt, d.h. in diesem Zustand weder zur Gleichspannung mit dem höheren noch zu der mit dem niedrigeren Potential hin durchgeschaltet ist. Hier wird vorgeschlagen, von beiden Gleichspannungsanschlüssen je eine Freilaufdiode zum Eingang des Serienresonanzkreises so zu schalten, daß diese Freilaufdioden im Ruhezustand des Schaltreglers gesperrt sind.

Die Art, in der die Verknüpfungsschaltung zwischen den Zuständen "Rückkopplung durchgeschaltet" und "Rückkopplung unterbrochen" hin und her schaltet, hat einen wesentlichen Einfluß auf die Umschaltverluste in den Elementen des elektronischen Schalters. Die Umschaltverluste sind am kleinsten, wenn die Umschaltung in einem stromlosen Moment erfolgt. Da der Strom im Serienresonanzkreis mit der Frequenz der Schwingung im Serienresonanzkreis periodisch durch Null geht, wird von den Erfindern vorgeschlagen, die Umschaltung zwischen den Zuständen "Rückkopplung durchgeschaltet" und "Rückkopplung unterbrochen" nur während der Nullstellen des Stromes im Serienresonanzkreis durchzuführen. Dazu ist in einer Ausgestaltung die Verknüpfungsschaltung so aufgebaut, daß die Unterbrechung oder Durchschaltung der Rückkopplung bei einem Umspringen der Regelspannung nicht sofort, sondern erst beim nächsten Umspringen der Rückkopplungsspannung, d.h. beim nächsten Nulldurchgang des Stromes durch den Serienresonanzkreis erfolgt.

In vielen praktischen Fällen ist es notwendig, zwischen dem elektronischen Schalter und dem Lastkreis eine Strom-, Spannungs-, bzw. Impedanzanpassung durchzuführen bzw. eine Potentialumkehr zu realisieren. Dazu wird vorgeschlagen, zwischen den Serienresonanzkreis und die Zweiweggleichrichterschaltung einen Transformator zu schalten. Da im Speicherelement, d.h. im Serienresonanzkreis ein hochfrequenter Wechselstrom fließt, kann so auf einfache Weise die gewünschte Anpassung bzw. Potentialumkehr durchgeführt werden. Der besondere Vorteil, der sich dabei gegenüber dem Stand der Technik ergibt, ist die Tatsache, daß der Transformator für einen rein sinusförmigen Strom einer festen Frequenz, also schmalbandig ausgelegt werden kann.

In einer weiteren Ausgestaltung sind mehrere Lastkreise vorhanden, von denen jeder mit einer eigenen Sekundärwicklung auf dem Transformator, einer eigenen Zweiweggleichrichterschaltung und einem eigenen Ladekondensator an den Schaltregler angeschlossen ist. Durch die Verwendung des Transformators können diese Lastkreise gleichzeitig versorgt werden.

Für die Zweiweggleichrichterschaltung sind dem Fachmann mehrere Schaltungsvarianten bekannt. In einer Ausgestaltung der Erfindung ist die Zweiweggleichrichterschaltung als Brückengleichrichter geschaltet.

In vielen Anwendungsfällen müssen von einem Netzgerät zwei zueinander symmetrische Spannungen geliefert werden. Beispiele hierfür sind Stromversorgungen für Operationsverstärker, die z.B. ±15 V als Versorgungsspannung benötigen, oder für HiFi-Vertärker mit Leistungsverstärkern in Komplementärschaltung. Für solche Fälle wird ein Schaltregler nach der Erfindung vorgeschlagen, bei dem zwei Lastkreise vorhanden sind, wobei die Zweiweggleichrichterschaltung so gestaltet ist, daß eine Diode zwischen dem Serienresonanzkreis und dem Ladekondensator des einen Lastkreises mit einer Polaritätsrichtung, und die zweite Diode zwischen dem Serienresonanzkreis und dem Ladekondensator des anderen Lastkreises mit der entgegengesetzten Polaritätsrichtung liegt. Dadurch entstehen in beiden Lastkreisen Ausgangsspannungen mit unterschiedlicher Polarität.

Die zuvor beschriebene Anordnung kann in äquivalenter Weise auch auf Schaltregler mit Transformator übertragen werden. In diesen Fällen wird vorgeschlagen, den Transformator mit mehreren Sekundärwicklungen zu versehen, an die einzelne Lastkreise mit parallel geschalteten Ladekondensatoren über Einweggleichrichter so angeschlossen sind, daß bei jeder Halbwelle des Stromes, der im Serienresonanzkreis fließt, wenigstens in einem der Einweggleichrichter und dem dazugehörigen Ladekondensator ein korrespondierender Strom fließt. Dadurch stellt sich für den Strom, der im Serienresonanzkreis fließt, über den Transformator hinweg eine äquivalente Zweiweggleichrichterwirkung ein. Der Vorteil einer solchen Anordnung besteht darin, daß gleichzeitig mehrere Ausgangsspannungen unterschiedlicher Größe und unterschiedlicher Polarität erzeugt werden können. Es muß nur sichergestellt sein, daß für jede der beiden Stromrichtungen im Serienresonanzkreis ein korrespondierender Strom in wenigstens einer der Sekundärwicklungen fließen kann, damit die Hochfrequenzschwingung im Serienresonanzkreis nicht hochohmig bedämpft wird, wobei sich keine Schwingung mehr aufbauen könnte.

Die beschriebenen Maßnahmen mit Einweg- und Zweiweggleichrichterschaltungen an den Sekundärwicklungen des Transformators lassen sich auch kombinieren. Deshalb wird weiterhin vorgeschlagen, den Transformator mit mehreren Sekundärwicklungen auszustatten, an die in gemischter Weise Lastkreise mit einer eigenen Zweiweggleichrichterschaltung und einem eigenen Ladekondensator und Lastkreise mit einem eigenen Einweggleichrichter und einem eigenen Ladekondensator angeschlossen sind.

Bei den bisherigen Ausführungen wurde angenommen, daß sowohl der Stromwandler, als auch die Impulsformerstufen, das Verknüpfungsglied und der elektronische Schalter ideal, d.h. ohne Zeitverzögerung arbeiten. In der Praxis muß man aber feststellen, daß diese Voraussetzung nicht immer genau genug erfüllt ist. Manche der beschriebenen Elemente verursachen geringe Zeitverzögerungen oder Phasenverschiebungen. Die Umschaltverluste im elektronischen Schalter sind aber nur dann am kleinsten, wenn die Umschaltung exakt im Nulldurchgang des Stromes, der im Serienresonanzkreis fließt, erfolgt. Um diese Bedingung möglichst gut zu erfüllen, wird vorgeschlagen, zwischen dem Stromwandler und dem Steuereingang des elektronischen Schalters einen Phasenschieber anzuordnen, der die Phase des Steuersignals so einstellt, daß die Umschaltung des elektronischen Schalters jeweils möglichst genau bei den Nulldurchgängen des Stromes im Serienresonanzkreis erfolgt.

Die Vorteile eines Schaltreglers nach der Erfindung liegen darin, daß die Elemente des elektronischen Schalters im stromlosen Zustand schalten. Diese Bedingung kann natürlich auch nur eingehalten werden, wenn der Strom im Serienresonanzkreis sich nicht so schnell ändert, daß er bereits während des Schaltvorganges wieder nennenswerte Größen annimmt. Dies kann über die Resonanzfrequenz des Serienresonanzkreises beeinflußt werden. Die Erfinder schlagen daher vor, die Elemente des Serienresonanzkreises so zu dimensionieren, daß die Resonanzfrequenz des Serienresonanzkreises eine Periodendauer ergibt, die mindestens eine Größenordnung, d.h. mindestens um den Faktor 10 länger ist als die Schaltzeit der im elektronischen Schalter verwendeten Elemente. Damit ist gewährleistet, daß der elektronische Schalter während des ganzen Schaltvorganges hinreichend stromlos bleibt. In praktischen Versuchen haben die Erfinder herausgefunden, daß mit dieser Dimensionierung z. Zt. Schaltregler für Leistungen bis etwa 1 kW mit Resonanzfrequenzen des Serienresonanzkreis bis zu etwa 1 MHz realisierbar sind.

Zur weiteren Verdeutlichung der Erfindung sind noch Zeichnungen beigefügt. Es zeigen:
- Fig. 1:: Prinzipschaltbild eines Schaltreglers nach der Erfindung mit Zeitverläufen einzelner Ströme und Spannungen.
- Fig. 2:: Prinzipschaltbild eines Schaltreglers nach dem Stand der Technik mit Zeitverläufen einzelner Ströme und Spannungen.
- Fig. 3:: Prinzipschaltbild eines Schaltreglers mit Komplementärstufe als elektronischem Schalter.
- Fig. 4:: Prinzipschaltbild eines Schaltreglers mit Quasi-Komplementärstufe als elektronischem Schalter und Transformator zur Lastanpassung.
- Fig. 5:: Prinzipschaltbild einer Verknüpfungsschaltung.
- Fig. 6:: Ausführlicheres Prinzipschaltbild eines Schaltreglers mit Transformator und Erzeugung einer Regelspannung U_{R}.
- Fig. 7:: Prinzipschaltbild eines Schaltreglers mit zwei Lastkreisen und Einweggleichrichterschaltungen.
- Fig. 8 und 9:: Schaltungen von Transformatoren mit mehreren Sekundärwicklungen, Ladekondensatoren und Einweggleichrichtern.
- Fig. 10:: Prinzipschaltbild eines Schaltreglers mit Phasenschieber zum Abgleich des Schaltzeitpunktes.

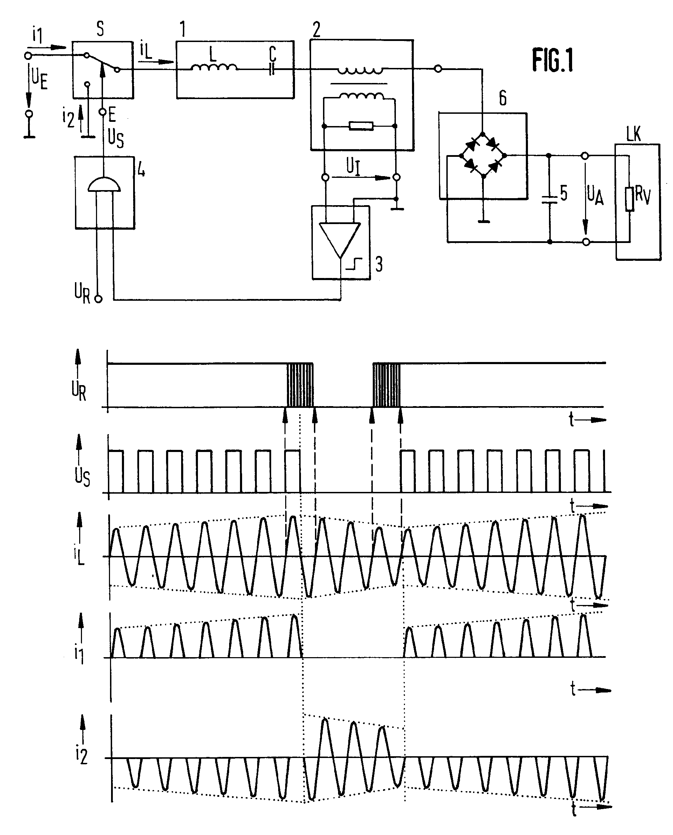

In Fig. 1 ist das Prinzipschaltbild eines Schaltreglers nach der Erfindung (oben) mit Zeitverläufen einzelner Ströme und Spannungen (unten) dargestellt. S ist der elektronische Schalter, der den aus L und C bestehenden Serienresonanzkreis 1 zwischen zwei Spannungen mit unterschiedlichen Potentialen hin und her schalten kann. Wegen der übersichtlicheren Darstellung beziehen sich dieses und die folgenden Beispiele auf den Sonderfall, bei dem ein Potential Null ist. Die beiden Potentiale sind daher durch die Eingangsspannung U_{E} und die Spannung Null representiert. In Serie zu dem Serienresonanzkreis 1 liegt ein Stromwandler 2, an dessen Ausgang eine dem im Serienresonanzkreis 1 fließenden Strom i_{L} möglichst phasengleiche Spannung u_{I} entsteht. Diese Spannung u_{I} wird über Impulsformerstufen 3 und die Verknüpfungsschaltung 4 an den Steuereingang E des elektronischen Schalters weitergegeben. Am zweiten Eingang der Verknüpfungsschaltung 4 liegt eine Regelspannung u_{R} an, die den Durchschaltezustand für die Rückkopplung bestimmt.

Der Lastkreis LK besteht hier ersatzweise aus dem Verbraucherwiderstand Rᵥ, dem der Ladekondensator 5 parallel liegt. Zwischen den Serienresonanzkreis 1 und den Ladekondensator 5 ist der Zweiweggleichrichter 6 geschaltet. Im Lastkreis LK entsteht dadurch die Ausgangsgleichspannung U_{A}.

Im unteren Teil von Fig. 1 sind die dazugehörigen Zeitverläufe der Regelspannung u_{R}, der den elektronischen Schalter steuernden Steuerspannung u_{S}, des im Serienresonanzkreis fließenden Stromes i_{L} und der beiden zu den Gleichspannungsquellen mit den unterschiedlichen Potentialen fließenden Ströme i₁ und i₂ dargestellt. Für die Regelspannung u_{R} ist ein willkürlicher Verlauf zwischen zwei Werten angenommen. Wie im folgenden zu sehen sein wird, kann die Regelspannung zwei relevante Werte annehmen. Diese beiden Werte veranlassen den Schaltregler, die Ausgangsspannung U_{A} entweder zu erhöhen oder zu erniedrigen. Soll die Ausgangsspannung U_{A} erhöht werden, dann muß die Regelspannung u_{R} einen Wert haben, bei dem die Verknüpfungsschaltung 4 die Rückkopplung durchschaltet. Soll dagegen die Ausgangsspannung U_{A} erniedrigt werden, so muß die Regelspannung u_{R} einen Wert haben, bei dem die Verknüpfungsschaltung 4 die Rückkopplung unterbricht. Auf diese Weise kann der Schaltregler die Ausgangsspannung U_{A} im Sinne einer Zweipunktregelung konstant halten oder entsprechend einer Führungsgröße regeln.

In Fig. 1 ist angenommen, daß die Verknüpfungsschaltung 4 die Rückkopplung durchschaltet, wenn die Regelspannung u_{R} einen Schwellwert überschreitet und die Rückkopplung unterbricht, wenn die Regelspannung u_{R} einen Schwellwert unterschreitet, also z.B. null ist. Solange die Rückkopplung durchgeschaltet ist, wird der elektronische Schalter 1 von der Steuerspannung u_{S} zwischen den beiden Gleichspannungen hin und her geschaltet. Wie in Fig. 1 gezeichnet, ist die zeitliche Zuordnung dabei so, daß der elektronische Schalter S auf die Gleichspannung mit dem höheren, d.h. positiveren Potential schaltet, wenn der Strom i_{L} mit positivem Momentanwert vom elektronischen Schalter S aus in den Serienresonanzkreis 1 hineinfließt, und auf die Gleichspannung mit dem niedrigeren, d.h. negativeren Potential schaltet, wenn der Strom i_{L} vom elektronischen Schalter S aus gesehen negative Momentanwerte aufweist. Da dieses einer positiven Rückkopplung, also einer Entdämpfung des Serienresonanzkreises gleichkommt, schwingt die Amplitude des Stromes i_{L} an. Dieser Anschwingvorgang hat prinzipiell einen exponentialförmigen Verlauf. Bei hoher Güte der Schwingkreiselemente L und C und geringen Wechselstromverlusten des Ladekondensators 5 kann aber bei den praktisch vorkommenden Stromamplituden von einem ungefähr linearen Anstieg ausgegangen werden.

Während dieses Anschwingens fließt bei den hier gewählten Polaritäten jede positive Halbwelle des Stromes i_{L} von der vorhandenen Gleichstromquelle u_{E} über den Serienresonanzkreis 1, den Stromwandler 2 und den Zweiweggleichrichter 6 in den Ladekondensator 5. Jede negative Halbwelle fließt vom Masseanschluß der Gleichstromquelle über den Serienresonanzkreis 1, den Stromwandler 2 und den Zweiweggleichrichter 6 mit gleicher Polarität wie bei der positiven Halbwelle in den Ladekondensator 5. Dadurch wird dem Ladekondensator 5 pulsierend Ladung zugeführt. In Fig. 1 können die zeitlichen Verläufe der Ströme i_{L}, i₁ und i₂ im Zusammenhang mit der Regelspannung u_{R} und der Steuerspannung u_{S} verfolgt werden. Geht die Regelspannung im Beispiel der Fig. 1 nach Null, so unterbricht die Verknüpfungsschaltung 4 die Rückkopplung. In diesem Beispiel ist angenommen, daß dann der elektronische Schalter S in der Stellung verharrt, die den Serienresonanzkreis 1 zur Gleichspannung mit dem niedrigeren Potential hin durchschaltet, hier also zum Masseanschluß der Gleichspannungsquelle U_{E}. Der gesamte Strom i_{L} fließt jetzt als Strom i₂ nach Masse. Jetzt wird dem Serienresonanzkreis 1 von der vorhandenen Gleichspannungsquelle keine Energie mehr zugeführt. Da jede Halbwelle des Stromes i_{L} weiterhin so durch den Zweiweggleichrichter 6 fließt, daß der Ladekondensator 6 aufgeladen wird, wird dem Serienresonanzkreis Energie entzogen und die Stromamplitude fällt. Auch dieser Amplitudenabfall verläuft exponentialförmig, kann aber unter den oben getroffenen Voraussetzungen im interessierenden Bereich als annähernd linear angenommen werden.

Es ist leicht nachzuweisen, daß sich bei passendem Zeitverlauf der Regelspannung u_{R} durch die abwechselnd steigende und fallende Amplitude des Stromes i_{L} eine mittlere Amplitude so einstellt, daß dem Ladekondensator 5 gerade so viel Ladung zugeführt wird, wie der Lastkreis bei der gewünschten Spannung U_{A} verbraucht. Damit ist eine Regelung der Spannung U_{A} über den Zeitverlauf der Regelspannung u_{R} möglich. Obwohl es sich prinzipiell um eine Zweipunktregelung handelt, kann bei genügend kurzen Intervallen der Regelspannung durch den Ladekondensator 5 jede beliebige Glättung der Ausgangsgleichspannung U_{A} erreicht werden.

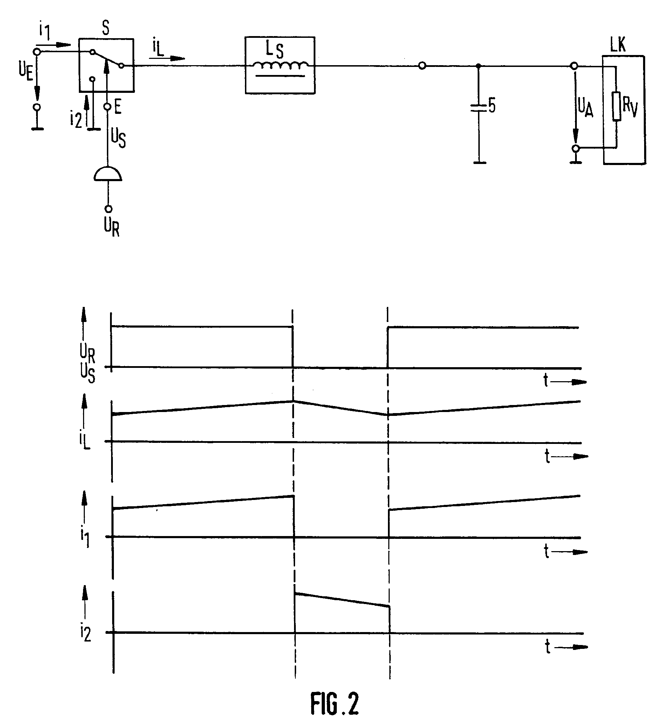

Mit Fig. 2 soll zunächst der Unterschied eines Schaltreglers nach der Erfindung zu einem Schaltregler nach dem Stand der Technik erläutert werden, bei dem als Speicherelement eine Speicherdrossel Lₛ verwendet wird. Ein elektronischer Schalter S schaltet den Eingang der Speicherdrossel Lₛ abwechselnd an zwei Gleichspannungen unterschiedlichen Potentials, wovon, wie in Fig. 2, auch ein Potential Null sein kann. Der in der Speicherdrossel Lₛ fließende Strom wird der Parallelschaltung aus dem Lastkreis LK und dem Ladekondensator 5 zugeführt. Mithilfe der Steuerspannung u_{R} wird der Eingang der Speicherdrossel Lₛ an die Gleichspannung mit dem höheren Potential gelegt, wenn die Spannung im Lastkreis erhöht werden soll, und an die Gleichspannung mit dem niedrigeren Potential, wenn die Spannung im Lastkreis erniedrigt werden soll. Auch diese Regelung arbeitet nach dem Prinzip des Zweipunktreglers. Der elektronische Schalter muß hier aber immer den vollen Strom der Speicherdrossel Lₛ schalten, was im Fall nichtidealer Schalter mit hohen Schaltverlusten verbunden ist. Die entsprechenden Stromverläufe sind in Fig. 2 ebenfalls dargestellt. Sie entsprechen prinzipiell den Amplitudenverläufen der Ströme bei einem Schaltregler nach der Erfindung.

Der Vorteil des Schaltreglers nach der Erfindung liegt also darin begründet, daß im Speicherelement nicht ein Gleichstrom fließt, der geschaltet werden muß, sondern ein Wechselstrom. Wegen der Eigenschaften des Speicherelementes, nämlich des Serienresonanzkreises, geht der Strom im Speicherelement mit hoher Frequenz periodisch durch Null. Wenn man als Schaltzeitpunkte diese Nulldurchgänge des Strömes verwendet, wie es in der Erfindung vorgeschlagen wird, kann man die Umschaltverluste der verfügbaren elektronischen Schalter gegenüber dem Stand der Technik drastisch reduzieren.

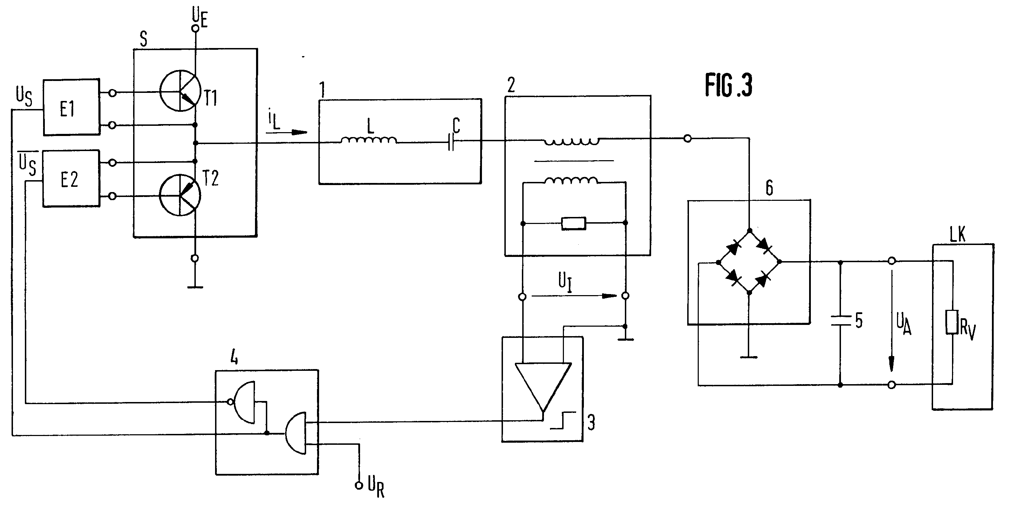

In Fig. 3 ist eine Ausführungsform des elektronischen Schalters beschrieben, bei der eine Komplementärstufe aus zwei bipolaren Transistoren T1 und T2 mit unterschiedlicher Betriebsspannungspolarität, d.h. einem npn- und einem pnp- Transistor verwendet wird. Die beiden Transistoren müssen gegenphasig angesteuert werden, um die beschriebenen Schaltvorgänge für das Speicherelement zu erhalten. Aus diesem Grund enthält die Verknüpfungsschaltung 4 noch einen Inverter, der aus der Steuerspannung für den einen Transistor noch die negierte Spannung als Steuerspannung für den anderen Transistor erzeugt. E1 und E2 sind Eingangsstufen für die Transistoren, die Treiberverstärker und Elemente für die Potentialtrennung enthalten können.

Selbstverständlich könnten in Fig. 3 statt der bipolaren Transistoren T1 und T2 auch Feldeffekttransistoren mit unterschiedlicher Betriebsspannungspolarität, also z.B. ein n-Kanal- und ein p-Kanal-FET, verwendet werden.

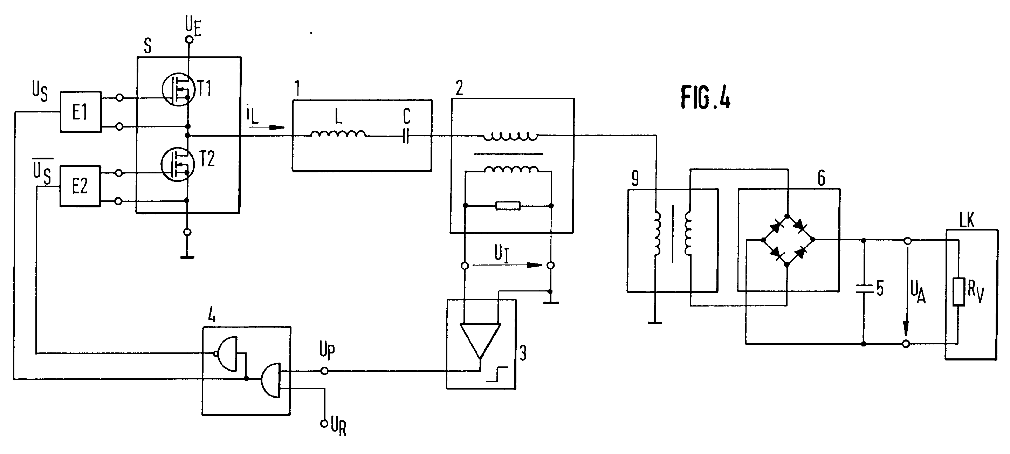

In Fig. 4 ist dagegen eine Ausführungsform des elektronischen Schalters beschrieben, bei der eine Quasi-Komplementärstufe aus zwei Feldeffekttransistoren T1 und T2 mit gleicher Betriebsspannungspolarität verwendet wird. In diesem Beispiel sind n-Kanal-Sperrschich-FETs als Schaltelemente angenommen. Die beiden Transistoren T1 und T2 müssen ebenfalls gegenphasig angesteuert werden, um die beschriebenen Schaltvorgänge für das Speicherelement zu erhalten. Aus diesem Grund enthält die Verknüpfungsschaltung 4 auch hier einen Inverter, der aus der Steuerspannung für den einen Transistor noch die negierte Spannung als Steuerspannung für den anderen Transistor erzeugt. Selbstverständlich könnten auch bipolare Transistoren mit gleicher Betriebsspannungspolarität, also z.B. zwei npn- oder zwei pnp-Transistoren, verwendet werden.

Die kleinstmöglichen Umschaltverluste in den Elementen des elektronischen Schalters erhält man, wenn die Umschaltungen ausschließlich in den Nulldurchgängen des Strömes stattfinden. Es ist also besonders vorteilhaft, den elektronischen Schalter nicht sofort zu betätigen, wenn die Regelspannung u_{R} umspringt, sondern auch dann auf den nächsten Nulldurchgang des Strömes zu warten. Wegen der hohen Frequenz des Strömes i_{L} im Serienresonanzkreis kann die Zeitverzögerung, die durch diese Maßnahme eintritt, bezogen auf die Taktzeiten der Regelspannung beliebig klein gehalten werden. In Fig. 1 sind im Verlauf der Regelspannung u_{R} die Zeitbereiche markiert, die zum gleichen Schaltzeitpunkt des elektronischen Schalters führen, wenn die Regelspannung in diesen Zeitbereichen umspringt. Die Markierung ist mit senkrechter Schraffur durchgeführt, was die unterschiedlichen Schaltflanken symbolisieren soll. Außerdem ist mit den gestrichelten Linien und den Pfeilen der Bezug zum Verlauf des Stromes i_{L} hergestellt.

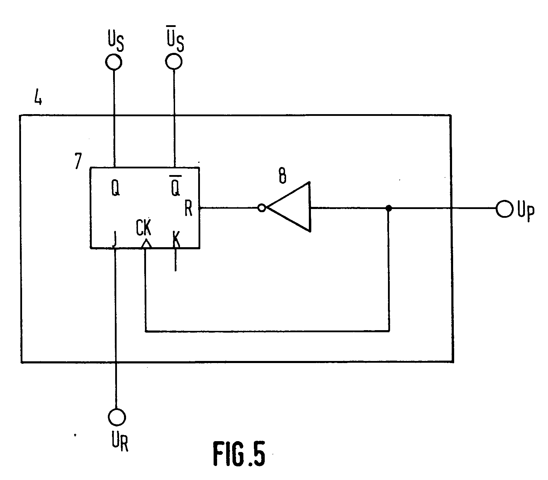

Eine Verknüpfungsschaltung, die den soeben beschriebenen Bedingungen genügt, ist in Fig. 5 dargestellt. Die Schaltung enthält ein JK-Flipflop 7, an dessen J-Eingang der Umschaltvorgang durch die Regelspannung u_{R} lediglich vorbereitet wird. Das Flipflop 7 kann nur schalten, wenn die Regelspannung u_{R} einer logischen "1" entspricht, was ein Durchschalten der Rückkopplung bedeutet. Solange die Regelspannung "1" ist, wird das Flipflop 7 bei jedem positiven Nulldurchgang des Stromes i_{L} von der Ausgangsspannung u_{P} der Impulsformerstufen 3 über den Clock-Eingang CK gesetzt. Damit wird der elektronische Schalter S über die Steuerspannung u_{S} auf die positivere Spannung geschaltet. Bei jedem negativen Nulldurchgang des Strömes i_{L} wird das Flipflop 7 über den Inverter 8 zurückgesetzt, und der elektronische Schalter S über die Steuerspannung u_{S} auf die negativere Spannung geschaltet. Bei einer solchen Schaltung kann auf einen zusätzlichen Inverter zur Gewinnung der negierten Steuerspannung verzichtet werden, da ein JK-Flipflop bereits einen negierenden Ausgang bereit hält.

Springt die Regelspannung u_{R} während einer Halbwelle auf "0", bei der das Flipflop 7 gesetzt ist, so bleibt das Flipflop bis zum nächsten negativen Nulldurchgang des Stromes i_{L} gesetzt und der elektronische Schalter schaltet ebenfalls erst bei diesem Nulldurchgang um. Springt die Regelspannung während einer Halbwelle auf "0", bei der das Flipflop 7 zurückgesetzt ist, so kann das Flipflop beim nächsten positiven Nulldurchgang des Strömes i_{L} nicht mehr einschalten.

Springt die Regelspannung u_{R} von "0" auf "1", so wird das Flipflop erst beim nächsten positiven Nulldurchgang des Stromes i_{L} gestzt und der elektronische Schalter schaltet ebenfalls erst bei diesem Nulldurchgang um. Damit ist sichergestellt, daß der elektronische Schalter S nur bei den Nulldurchgängen des Strömes schaltet.

Alle bisherigen Beschreibungen beziehen sich auf den Zustand, bei dem im Serienresonanzkreis 1 bereits ein hochfrequenter Wechselstrom fließt. Dem Fachmann ist aber klar, daß zusätzliche Maßnahmen getroffen werden müssen, um die Schaltung beim Einschalten anschwingen zu lassen. Es sind viele Möglichkeiten vorhanden, um ein solches Anschwingen zu erreichen. Eine sehr einfache Möglichkeit besteht darin, dem Steuereingang E des elektronischen Schalters 1 zum Anschwingen einen Einzelimpuls oder eine kurze Impulsgruppe zuzuführen, die nicht aus dem Strom i_{L}, sondern aus einem Hilfsoszillator abgeleitet sind, und deren Pulsdauer ungefähr der halben Periodendauer des Serienresonanzkreises bzw. deren Pulswiederholfrequenz ungefähr der Resonanzfrequenz des Serienresonanzkreises 1 entspricht. Auf diese Anschwinghilfe soll aber auch im folgenden nicht weiter eingegangen werden, da sie für den Erfindungsgedanken nicht entscheidend ist.

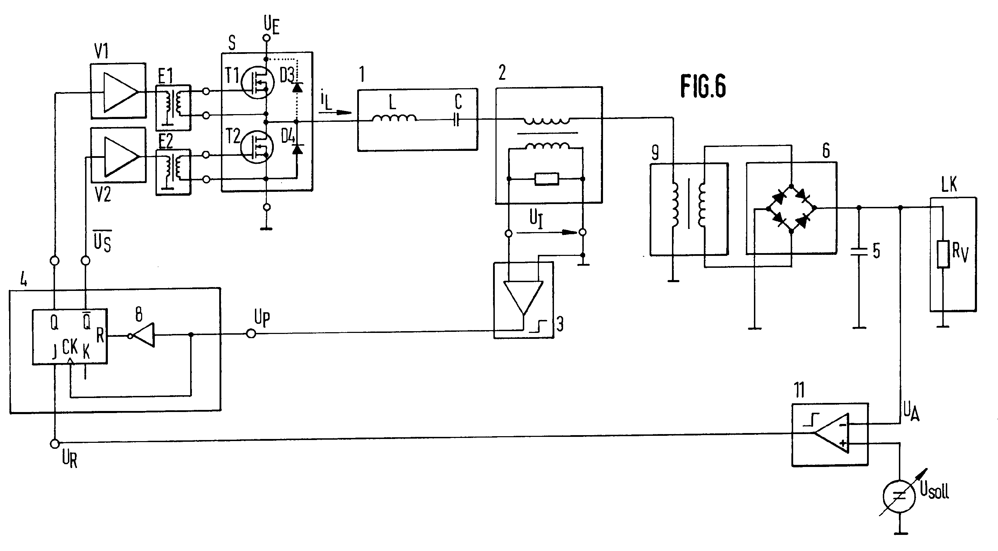

In Fig. 6 ist ein etwas ausführlicheres Prinzipschaltbild eines Schaltreglers nach der Erfindung gezeichnet. In diesem Fall wird als elektronischer Schalter eine Quasi-Komplementärschaltung aus zwei Feldeffekttransistoren verwendet. Die Transistoren werden von der zuvor beschriebenen Verknüpfungsschaltung angesteuert, die ein Umschalten des elektronischen Schalters nur in den Nulldurchgängen des Strömes i_{L} zuläßt. Die Ansteuerung der beiden Transistoren T1 und T2 erfolgt von den beiden Ausgänge des Flipflops 7, die zueinander gegenphasig sind, über die Treiberstufen V1 und V2, und über die Eingangsschaltungen E1 und E2, die in diesem Fall als einfache Übertrager angenommen sind. Die Verknüpfungsschaltung 4 verharrt in diesem Beispiel zu den Zeiten, in denen die Rückkopplung unterbrochen ist, in einem Zustand, in dem der elektronische Schalter S zur niedrigeren Spannung, in diesem Beispiel also zur Masse hin durchgeschaltet bleibt. Während dieser Zeit kann der Transitor T2 nur die negativen Halbwellen des Strömes i_{L}, die im Transistor T2 als positiver Strom fließen, übernehmen. Für die positiven Halbwellen ist eine Freilaufdiode D4 vorgesehen, die vom Eingang des Serienresonanzkreises zur Masse geschaltet ist. Ihre Polarität ist so gewählt, daß sie im Ruhezustand des Schaltreglers gesperrt ist. Unter Ruhezustand ist der Zustand zu verstehen, in dem überhaupt keine Ströme fließen, also z.B. vor dem Anschwingen. In diesem Beispiel liegt also die Freilaufdiode D4 mit ihrer Anode an Masse.

Die ebenfalls eingezeichnete Freilaufdiode D3 ist in diesem Beispiel nicht notwendig. Sie wäre aber anzubringen, wenn die Verknüpfungsschaltung 4 zu den Zeiten, in denen die Rückkopplung unterbrochen ist, in einem solchen Zustand verharrte, daß weder Transistor T1 noch Transistor T2 eingeschaltet bleiben. Entsprechend wäre nur die Freilaufdiode D3 notwendig, wenn während dieser Zeiten Transistor T1 durchgeschaltet bliebe.

In Fig. 6 ist weiterhin ein Transformator 9 vorgesehen, mit dem eine Strom-, Spannungs-, Impedanz- oder Polaritätsanpassung des Lastwiderstandes Rᵥ, durchgeführt werden kann. Dieser Transformator ist für eine Frequenz auszulegen, die der Resonanzfrequenz des Serienresonanzkreises 1 entspricht.

Weiterhin ist in Fig. 6 für ein Beispiel gezeigt, wie man die Regelspannung u_{R} gewinnen kann. In diesem Fall wird angenommen, daß die Ausgangsspannung U_{A} des Schaltreglers konstant gehalten werden soll. Diese Spannung wird mithilfe eines Komparators 11 mit einer vorwählbaren Sollspannung Uₛₒₗₗ verglichen. Die Ausgangsspannung des Komparators ist logisch "1", wenn U_{A}<Uₛₒₗₗ und logisch "0", wenn U_{A}>Uₛₒₗₗ. Sie erfüllt daher die Bedingungen, um als Regelspannung u_{R} verwendet werden zu können. Natürlich kann die Regelspannung u_{R} in beliebigen anderen Anwendungsfällen auch von ganz anderen physikalischen Großen abgeleitet werden, wie z.B. von der Ausgangsleistung eines Hochfrequenzgenerators, der von diesem Schaltregler mit seiner Betriebsspannung versorgt wird, und bei dem die Ausgangsleistung mit der Betriebsspannung geregelt werden kann.

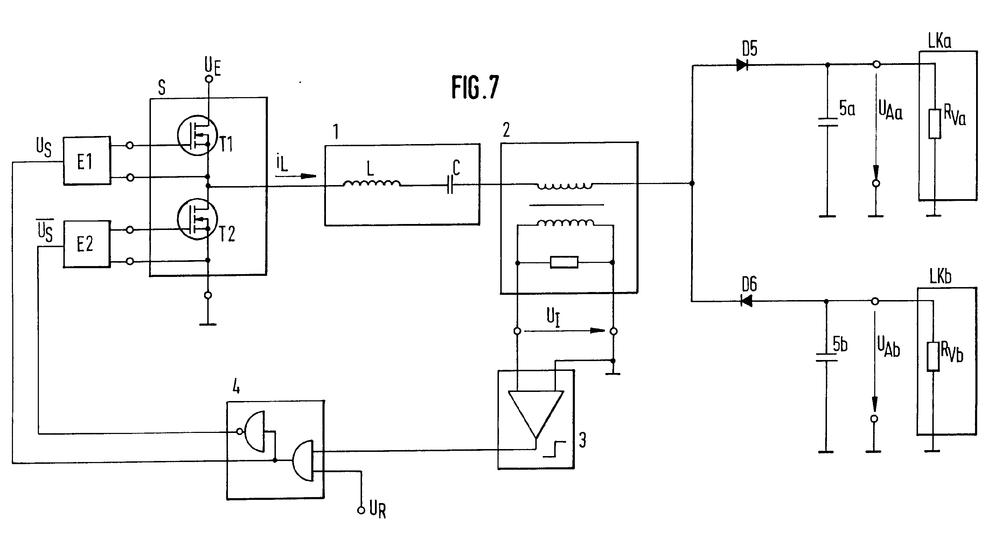

In Fig. 7 ist ein Beispiel gezeigt, bei dem zwei Lastkreise LKa und LKb vorhanden sind. Jeder Lastkreis hat einen eigenen Einweggleichrichter D5 und D6, und einen eigenen Ladekondensator 5a und 5b. Die beiden Einweggleichrichter D5 und D6 sind so gepolt, daß in den beiden Lastkreisen LK1 und LK2 Ausgangsspannungen U_{Aa} und U_{Ab} mit unterschiedlicher Polarität entstehen. Dadurch können die Halbwellen des Strömes i_{L} je nach Polarität in einem der beiden Einweggleichrichter fließen. Für den Strom i_{L} stellt sich damit eine Wirkung ein, die einem Zweiweggleichrichter äquivalent ist.

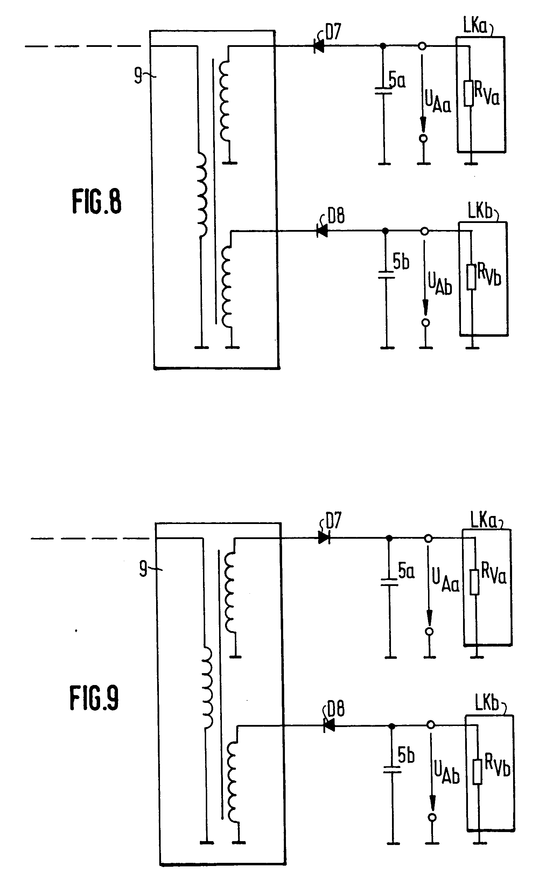

In den Figuren 8 und 9 sind zwei Schaltungen angegeben, die einen Transformator 9 zur Ankopplung von je zwei Lastkreisen an den Schaltregler verwenden. Auf der Sekundärseite des Transformators 9 sind zwei Wicklungen angebracht, an die jeweils ein Lastkreis mit parallel geschalteten Ladekondensatoren 5a und 5b über Einweggleichrichter D7 und D8 angeschlossen sind. Der Wicklungssinn jeder Wicklung ist, wie üblich, mit einem Punkt gekennzeichnet. Die Schaltungsrichtung der Dioden ist jeweils so an den Wicklungssinn der betreffenden Sekundärwicklung angepaßt, daß bei jeder Halbwelle des Strömes i_{L} wenigstens in einem der Einweggleichrichter D7 und D8 und dem dazugehörigen Ladekondensator 5a und 5b ein korrespondierender Strom fließt. Daher sind beide Schaltungen äquivalent zu der Schaltung in Fig. 7, wenn man die Übertragereigenschaften des Transformators 9 berücksichtigt. Der Vorteil dieser Schaltungsvariante ist, daß man aus einem Schaltregler mehrere Spannungen unterschiedlicher Größe und Polarität entnehmen kann. Es ist einleuchtend, daß dieses Prinzip auch mit mehr als zwei Sekundärwicklungen und auch in Kombination mit Zweiweggleichrichtern an einer oder mehreren Sekundärwicklungen angewendet werden kann.

Fig. 10 zeigt einen Schaltregler, der mit einer Phasenschieberschaltung 10 versehen ist. Mit dieser Schaltung wird die Phase des Rückkopplungssignals so eingestellt, daß die Schaltvorgänge des elektronischen Schalters auch wirklich genau mit den Nulldurchgängen des Strömes i_{L} zusammenfallen. Damit können Laufzeiten in den digitalen Bausteinen und Phasenfehler der analogen Bausteine, wie des Stromwandlers 2, ausgeglichen werden. Selbstverständlich kann der Phasenschieber auch digital aufgebaut sein und wäre dann in den Impulsformerstufen 3 oder an irgend einer Stelle zwischen den Impulsformerstufen 3 und dem Steuereingang E des elektronischen Schalters anzuordnen.

## Patentansprüche

1. Selbstschwingende Schaltungsanordnung für einen Wechselrichter oder für einen Gleichspannungswandler, mit einem elektronischen Schalter, sowie mit einem Anschluß zur Verbindung mit einer Last, und mit einer Rückkopplungsschaltung, wobei:
- zwischen dem elektronischen Schalter (2) und dem Anschluß für die Last ein Serienresonanzkreis (1) eingefügt ist, und
- an den Serienresonanzkreis ein Phasendetektor (2,3) angeschlossen ist, der die Phase des Stroms in dem Serienresonanzkreis detektiert,
- der Phasendetektor Schaltimpulse (U_{P}) liefert, die synchron zur Phase des Stroms (i_{L}) im Serienresonanzkreis sind,
- welche Schaltimpulse (U_{P}) über eine Rückkopplungsschaltung so einem Steuereingang (E) des elektronischen Schalters zugeführt werden, daß
- der Eingang des elektronischen Schalters (S) abwechselnd auf zwei Gleichspannungen mit unterschiedlichem Potential geschaltet wird,wobei
- der elektronische Schalter (S) auf die Gleichspannung (U_{E}) mit dem höheren, d.h. positiveren Potential schaltet, wenn der Strom (i_{L}) im Serienresonanzkreis (1) mit positivem Momentanwert vom elektronischen Schalter (S) aus in den Serienresonanzkreis (1) hineinfließt, und der elektronische Schalter (S) auf die Gleichspannung mit dem niedrigeren, d.h. negativeren Potential schaltet, wenn der momentane Strom (i_{L}) im Serienresonanzkreis (1) vom elektronischen Schalter (S) aus gesehen negative Momentanwerte aufweist, so daß eine Selbsterregung entsteht,
**dadurch gekennzeichnet**, daß in der Rückkopplungsschaltung vor dem Ein gang des elektronischen Schalters (S) eine Verknüpfungsschaltung (4) angeordnet ist, welcher eine binäre Regelspannung (U_{R}) und die Schaltimpulse (U_{P}) zugeführt werden und welche Steuerspannungen (U_{S}; U_{S}, U̅_{S}) an die Steuereingänge (E; E₁, E₂) des elektronischen Schalters (S) liefert, und daß die Verknüpfungsschaltung (4) derart gestaltet ist, daß die Regelspannung (U_{R}) die Rückkopplungsschaltung möglichst genau nur in den Zeitpunkten durchschaltet oder unterbricht, in denen der Strom (i_{L}) im Serienresonanzkreis (1) Null ist und die Amplitude der Ausgangsspannung (U_{A}) durch zeitweises phasensynchrones Unterbrechen oder Durchschalten der Rückkopplungsschaltung auf den Sollwert (U_{Soll}) geregelt wird.

2. Schaltungsanordnung nach Anspruch 1, **dadurch gekennzeichnet**, daß die Verknüpfungsschaltung (4) so aufgebaut ist, daß die Unterbrechung oder Durchschaltung der Rückkopplung bei einem Umspringen der Regelspannung (U_{R}) nicht sofort, sondern erst beim nächsten Umspringen der Rückkopplungsspannung (U₁), das heißt beim nächsten Nulldurchgang des Stromes (i_{L}) durch den Serienresonanzkreis (1) erfolgt)

3. Schaltungsanordnung nach Anspruch 1, **dadurch gekennzeichnet**, daß der elektronische Schalter (S) als Komplementärschaltung oder als Quasikomplementärschaltung aus zwei Transistoren (T1,T2) mit unterschiedlicher bzw. gleicher Betriebsspannungspolarität aufgebaut ist.

4. Schaltungsanordnung nach Anspruch 1, **dadurch gekennzeichnet**, daß die Verknüpfungsschaltung (4) im Falle der Unterbrechung der Rückkopplung in einem solchen Ruhezustand verharrt, daß der elektronische Schalter (S) zur Gleichspannung mit dem niedrigeren bzw. höheren Potential hin durchgeschaltet bleibt, und daß von diesem Gleichspannungsanschluß zum Eingang des Serienresonanzkreises (1) eine Freilaufdiode (D4 bzw. D3) so geschaltet ist, daß die betreffende Freilaufdiode im Ruhezustand des Wechselrichters gesperrt ist.

5. Schaltungsanordnung nach Anspruch 1, **dadurch gekennzeichnet**, daß die Verknüpfungsschaltung (4) im Falle der Unterbrechung der Rückkopplung in einem solchen Ruhezustand verharrt, daß der elektronische Schalter (S) geöffnet bleibt, und daß von beiden Gleichspannungsanschlüssen je eine Freilaufdiode (D3,D4) zum Eingang des Serienresonanzkreises (1) so geschaltet ist, daß diese Freilaufdioden (D3,D4) im Ruhezustand des Wechselrichters gesperrt sind.

6. Schaltungsanordnung nach Anspruch 1, **dadurch gekennzeichnet**, daß in der Last eine Zweiweggleichrichterschaltung (6) enthalten ist, die zwischen dem Serienresonanzkreis und der Last (LK) angeschlossen ist.

7. Schaltungsanordnung nach Anspruch 1, **dadurch gekennzeichnet**, daß zwischen dem Stromwandler (2) und dem Steuereingang (E) des elektronischen Schalters (S) ein Phasenschieber (10) liegt, der die Phase des Steuersignals so einstellt, daß die Umschaltung des elektronischen Schalters jeweils möglichst genau bei den Nulldurchgängen des Stromes (i_{L} ) im Serienresonanzkreis (1) erfolgt.

8. Schaltungsanordnung nach Anspruch 1, **dadurch gekennzeichnet**, daß zwischen dem Serienresonanzkreis (1) und der Gleichrichterschaltung (6) ein Transformator (9) angeschlossen ist.

9. Schaltungsanordnung nach einem der vorhergehenden Ansprüche, **dadurch gekennzeichnet**, daß die Elemente (L,C) des Serienresonanzkreises (1) so dimensioniert sind, daß die Resonanzfrequenz des Serienresonanzkreises eine Periodendauer ergibt, die mindestens eine Größenordnung, das heißt mindestens um den Faktor 10 größer ist als die Schaltzeit der im elektronischen Schalter (s) verwendeten Elemente (T1,T2).

10. Schaltungsanordnung nach einem der vorhergehenden Ansprüche, **dadurch gekennzeichnet**, daß die Verknüpfungsschaltung (4) ein JK-Flipflop (7) enthält, dessen J-Eingang die Regelspannung (U_{R}) zuführbar ist, und daß die von der Impulsformerschaltung (3) der Rückkopplungsschaltung gelieferten Schaltimpulse (U_{P}) einerseits dem Clock-Eingang (CK) direkt und andererseits über einen Inverter (8) dem Rücksetzeingang (R) zuführbar sind.

11. Schaltungsanordnung nach Anspruch 1, **dadurch gekennzeichnet**, daß ein Hilfsoszillator vorgesehen ist, der einen Einzelimpuls oder eine kurze Impulsgruppe an den Steuereingang (E) des elektronischen Schalters (S) liefert, wenn der Strom (i_{L}) im Serienresonanzkreis (1) so klein ist, daß die Impulsformerstufe (3) keine Spannungsimpulse (U_{P}) mehr liefert und die Regelspannung (U_{R}) auf das Potential springt, welches die Verknüpfungsschaltung in den Zustand setzt, daß die Ausgangsspannung der Impulsformerstufe an die Eingangsstufen des elektronischen Schalters (S) durchgeschaltet werden.

## Claims

1. A self-oscillating switching arrangement for an inverted converter or for a direct current transformer, with an electronic switch, and also with a connection to connect with a load, and with a feedback circuit, in which:
- between the electronic switch (2) and the connection for the load a series-resonance circuit (1) is included, and
- a phase detector (2,3) is connected to the series-resonance circuit, which phase detector (2,3) detects the phase of the current in the series-resonance circuit,
- the phase detector delivers switching pulses (Uₚ), which are in synchronism with the phase of the current (i_{L}) in the series-resonance circuit,
- which switching pulses (Uₚ) are supplied via a feedback circuit to a control input (E) of the electronic switch so that
- the input of the electronic switch (S) is switched alternately to two direct voltages with different potential, in which
- the electronic switch (S) switches to the direct voltage (U_{E} ) with the higher, i.e. more positive potential, when the current (i_{L}) in the series-resonance circuit (1) flows with a positive instantaneous value from the electronic switch (S) into the series-resonance circuit (1), and the electronic switch (S) switches to the direct voltage with the lower, i.e. more negative potential, when the instantaneous current (i_{L}) in the series-resonance circuit (1) has negative instantaneous values, seen from the electronic switch (S), so that a self-excitation occurs, characterised in that in the feedback circuit, before the input of the electronic switch (S), a linking circuit (4) is arranged, to which a binary control potential (U_{R}) and the switching pulses (Uₚ) are supplied, and which delivers control voltages (U_{S} ; U_{S}, U̅_{S}) to the control inputs (E; E₁ , E₂ ) of the electronic switch (S), and that the linking circuit (4) is designed such that the control potential (U_{R} ) connects through or interrupts the feedback circuit as precisely as possible only at the instants in which the current (i_{L} ) in the series-resonance circuit (1) is zero and the amplitude of the output voltage (U_{A}) is regulated by occasional phase-synchronic interruption or switching through of the feedback circuit to the nominal value (Uₙₒₘ).

2. A switching arrangement according to Claim 1, characterised in that the linking circuit (4) is constructed so that the interruption or switching through of the feedback does not take place immediately on a jumping of the control potential (U_{R}), but rather only on the next jumping of the feedback voltage (U₁), i.e. at the next zero passage of the current (i_{L}) through the series-resonance circuit (1).

3. A switching arrangement according to Claim 1, characterised in that the electronic switch (S) is constructed as a complementary circuit arrangement or a quasi-complementary circuit arrangement of two transistors (T1,T2) with differing or identical operating voltage polarity.

4. A switching arrangement according to Claim 1, characterised in that the linking circuit (4), in the case of interruption of the feedback, remains in such a state of rest that the electronic switch (S) remains switched through to the direct voltage with the lower or higher potential, and that from this direct voltage connection to the input of the series-resonance circuit (1) a free-running diode (D4 or D3) is connected so that the respective free-running diode is blocked in the state of rest of the inverted converter.

5. A switching arrangement according to Claim 1, characterised in that the linking circuit (4), in the case of interruption of the feedback, remains in such a state of rest that the electronic switch (S) remains opened, and that from each of the two direct voltage connections a free-running diode (D3,D4) is connected to the input of the series-resonance circuit (1) so that these free-running diodes (D3,D4) are blocked in the state of rest of the inverted converter.

6. A switching arrangement according to Claim 1, characterised in that a full-wave rectifier circuit (6) is contained in the load, which is connected between the series-resonance circuit and the load (LK).

7. A switching arrangement according to Claim 1, characterised in that between the current transformer (2) and the control input (2) of the electronic switch (S) there is a phase shifter (10), which sets the phase of the control signal so that the changeover of the electronic switch takes place in each case as precisely as possible with the zero passages of the current (i_{L}) in the series-resonance circuit (1).

8. A switching arrangement according to Claim 1, characterised in that between the series-resonance circuit (1) and the rectifier circuit (6) a transformer (9) is connected.

9. A switching arrangement according to one of the preceding Claims, characterised in that the elements (L,C) of the series-resonance circuit (1) are dimensioned such that the resonance frequency of the series-resonance circuit produces a period duration which is at least an order of magnitude i.e. at least greater by the factor 10 than the switching time of the elements (T1,T2) used in the electronic switch (s).

10. A switching arrangement according to one of the preceding Claims, characterised in that the linking circuit (4) contains a JK flipflop (7), to the J-input of which the control potential (U_{R}) is able to be supplied, and that the switching pulses (Uₚ) delivered from the pulse shaper circuit (3) of the feedback circuit are able to be supplied on the one hand directly to the clock input (CK) and on the other hand to the reset input (R) via an inverter (8).

11. A switching arrangement according to Claim 1, characterised in that an auxiliary oscillator is provided, which delivers a single pulse or a short pulse group to the control input (E) of the electronic switch (S), when the current (i_{L}) in the series-resonance circuit (1) is so small that the pulse shaper stage (3) no longer delivers any voltage pulses (Uₚ ) and the control potential (U_{R}) jumps to the potential which sets the linking circuit into the state that the output voltage of the pulse shaper stage is switched through to the input stages of the electronic switch (S).

## Revendications

1. Montage commutateur auto-oscillant pour un onduleur ou pour un convertisseur de courant continu, comprenant un commutateur électronique ainsi qu'une borne pour la liaison avec une charge et un circuit à rétroaction,
- un circuit de résonance série (1) étant inséré entre le commutateur électronique (S) et la borne pour la charge, et
- un détecteur de phase (2, 3) qui détecte la phase du courant dans le circuit de résonance série, étant raccordé au circuit de résonance série,
- le détecteur de phase fournissant des impulsions de commutation (Uₚ) qui sont synchrones avec la phase du courant (i_{L}) dans le circuit de résonance série,
- lesdites impulsions de commutation (Uₚ) étant transmises par un circuit à rétroaction à une entrée de commande (E) du commutateur électronique de sorte que
- l'entrée du commutateur électronique (S) est commutée alternativement sur deux tensions continues de potentiel différent,
- le commutateur électronique (S) effectuant une commutation sur la tension continue (U_{E}) qui a le potentiel le plus élevé, c'est-à-dire le potentiel le plus positif, lorsque le courant (i_{L}) dans le circuit de résonance série (1) passe avec une valeur momentanée positive du commutateur électronique (S) dans le circuit de résonance série (1) et le commutateur électronique (S) effectuant une commutation sur la tension continue qui a le potentiel le plus faible, c'est-à-dire le potentiel le plus négatif, lorsque le courant momentané (i_{L}) dans le circuit de résonance série (1) présente des valeurs momentanées négatives, vu depuis le commutateur électronique (S), si bien qu'il se produit une auto-excitation,
**caractérisé** par le fait que le circuit à rétroaction comporte, en amont de l'entrée du commutateur électronique (S), un circuit combinatoire (4) auquel sont transmises une tension de réglage (U_{R}) binaire et les impulsions de commutation (Uₚ) et qui applique des tensions de commande (U_{S} ; U_{S}, U̅_{S}) aux entrées de commande (E ; E₁, E₂) du commutateur électronique (S) et que le circuit combinatoire (4) est conçu de sorte que la tension de réglage (U_{R}) établit ou interrompt le circuit à rétroaction aussi précisément que possible uniquement aux moments où le courant (i_{L}) dans le circuit de résonance série (1) est nul et de sorte que l'amplitude de la tension de sortie (U_{A}) est réglée sur la valeur de consigne (U_{Soll}) par une interruption ou une connexion temporaire synchrone avec la phase, du circuit à rétroaction.

2. Montage commutateur selon la revendication 1, **caractérisé** par le fait que le circuit combinatoire (4) est construit de telle sorte que l'interruption ou la transmission de la rétroaction ne s'effectue pas immédiatement en cas de saut de la tension de réglage (U_{R}) mais seulement lors du prochain saut de la tension de rétroaction (U₁), c'est-à-dire lors du prochain passage par zéro du courant (i_{L}) dans le circuit de résonance série (1).

3. Montage commutateur selon la revendication 1, **caractérisé** par le fait que le commutateur électronique (S) est composé, en tant que circuit complémentaire ou circuit quasi-complémentaire, de deux transistors (T1, T2) avec des polarités de tension de service égales ou différentes.

4. Montage commutateur selon la revendication 1, **caractérisé** par le fait que, en cas d'interruption de la rétroaction, le circuit combinatoire (4) demeure dans un état de repos tel que le commutateur électronique (S) reste commuté sur la tension continue présentant le potentiel le plus faible ou le plus élevé et en ce qu'une diode de roue libre (D4 ou D3) est montée à partir de cette borne de tension continue vers l'entrée du circuit de résonance série (1) de telle sorte que la diode de roue libre concernée soit bloquée à l'état de repos de l'onduleur.

5. Montage commutateur selon la revendication 1, **caractérisé** par le fait que, en cas d'interruption de la rétroaction, le circuit combinatoire (4) demeure dans un état de repos tel que le commutateur électronique (S) reste ouvert et en ce qu'une diode de roue libre (D3, D4) est montée à partir de chacune des deux bornes de tension continue vers l'entrée du circuit de résonance série (1) de telle sorte que ces diodes de roue libre (D3, D4) soient bloquées à l'état de repos de l'onduleur.

6. Montage commutateur selon la revendication 1, **caractérisé** par le fait que la charge contient un circuit redresseur à deux voies (6) qui est raccordé entre le circuit de résonance série et la charge (LK).

7. Montage commutateur selon la revendication 1, **caractérisé** par le fait qu'il est prévu entre le convertisseur de courant (2) et l'entrée de commande (E) du commutateur électronique (S), un déphaseur (10) qui règle la phase du signal de commande de telle sorte que la commutation du commutateur électronique s'effectue chaque fois le plus exactement possible lors des passages par zéro du courant (i_{L}) dans le circuit de résonance série (1).

8. Montage commutateur selon la revendication 1, **caractérisé** par le fait qu'un transformateur (9) est raccordé entre le circuit de résonance série (1) et le circuit redresseur (6).

9. Montage commutateur selon l'une 'des revendications précédentes, **caractérisé** par le fait que les éléments (L, C) du circuit de résonance série (1) sont dimensionnés de telle sorte que la fréquence de résonance du circuit de résonance série donne une durée de période qui est supérieure d'au moins un ordre de grandeur, c'est-à-dire d'au moins un facteur 10, au temps de commutation des éléments (T1, T2) utilisés dans le commutateur électronique (S).

10. Montage commutateur selon l'une des revendications précédentes, **caractérisé** par le fait que le circuit combinatoire (4) comprend une bascule JK (7) à l'entrée J de laquelle peut être transmise la tension de réglage (U_{R}) et que les impulsions de commutation (Up) fournies par le circuit formateur d'impulsions (3) du circuit à rétroaction peuvent être transmises d'une part directement à l'entrée d'horloge (CK) et d'autre part à l'entrée de remise à l'état initial (R) par l'intermédiaire d'un inverseur (8).

11. Montage commutateur selon la revendication 1, **caractérisé** par le fait qu'il est prévu un oscillateur auxiliaire qui fournit une impulsion individuelle ou un court groupe d'impulsions à l'entrée de commande (E) du commutateur électronique (S) lorsque le courant (i_{L}) dans le circuit de résonance série (1) est si faible que l'étage formateur d'impulsions (3) ne fournit plus d'impulsions de tension (Uₚ) et que la tension de réglage (U_{R}) saute au potentiel qui met le circuit combinatoire dans l'état dans lequel la tension de sortie de l'étage formateur d'impulsions est transmise aux étages d'entrée du commutateur électronique (S).
